# EUROPEAN PATENT APPLICATION

(11) **EP 2 306 375 A1**
(43) Date of publication of application: **06.04.2011**
(21) Application number: 09170231.6
(22) Date of filing: 14.09.2009
(51) Int. Cl.: G06Q 10/00

(54) **Method and apparatus for providing reminders associated with calendar event data**

(71) Applicant: RESEARCH IN MOTION LIMITED, Waterloo, Ontario N2L 3W8 (CA)
(72) Inventor: Vuong, Thanh Vinh, Waterloo Ontario N2L 3L3 (CA)
(74) Representative: MERH-IP Matias Erny Reichl Hoffmann

(57) **Abstract**

A method and computing device for providing reminders associated with calendar event data stored in a memory device of the computing device is provided. The calendar event data comprises a start time and an end time associated with a calendar event. A list of items is received. The current time is compared to the end time via a clock device associated with the computing device. If the current time substantially matches the end time, a display device in communication with the computing device is controlled to provide a representation of the list of items associated with the calendar event data.

## Description

### FIELD

The specification relates generally to calendar databases, and specifically to a method for providing reminders associated with calendar event data in an electronic device.

### BACKGROUND

General lack of reminders provided via a computing device after a calendared event has started can lead to inefficient use of computing resources at the computing device. For example, a list of items stored at the computing device must be retrieved from a memory via receipt of input data, and the list of items specially rendered at a display device.

### SUMMARY

When attending a calendared event, items are often brought along as tools (e.g. electronic devices such as laptops or Personal Digital Assistants (PDAs), projectors, reference material, an agenda, (either paper agenda or electronic agenda) etc.), to pass the time (books), etc. In general, each of these items should be taken away from the calendar event. Furthermore, items are often generated during the calendar event, such as e-mails, video data, voice data, and the like, which generally are also to be taken away from the calendar event. While a list of the items that should be brought and taken from the event can be generated via a word processing program, this necessitates use of computing resources (e.g. processing time and memory) to generate and store such a list in addition to computing resources used to store calendar event data associated with the calendar event. Furthermore, use of such an additional list requires that the existence of the list be remembered and its use manually coordinated with the end of the meeting to ensure that items are not forgotten. Even if the existence of the list is remembered, further computing resources are used to retrieve and display the list.

A first aspect of the specification provides a method for providing reminders associated with calendar event data stored in a memory device of a computing device, the computing device comprising a processing unit interconnected with the memory device, the calendar event data comprising start time data and duration data associated with a calendar event, the start time data representative of a start time of the calendar event and the duration data associated with a length of the calendar event. The method comprises receiving, at said processing unit, a list of items associated with the calendar event data. The method further comprises determining, at said processing unit, a reminder time associated with the list of items, the reminder time occurring after the start time. The method further comprises comparing, at said processing unit, a current time to the reminder time via a clock device associated with the computing device. The method further comprises, when the current time substantially matches the reminder time, controlling, via said processing unit, a display device associated with the computing device to provide a representation of the list of items associated with the calendar event data.

Receiving the list of items can comprise receiving input data representative of items on the list of items. The method can further comprise storing the input data in the memory device in association with the calendar event data for at least one of generating the list of items and updating the list of items. Receiving the input data representative of items on the list of items can occur in association with generating the calendar event data.

The method can further comprise receiving input data representative of removing at least one item from the list of items, and updating the list of items by removing the at least one item from the list of items.

The representation of the list of items can be provided in association with controlling the display device to provide a reminder of an end time of the meeting.

The method can further comprise receiving input data representative of changing a status of at least one item on the list from unchecked to checked. Changing the status can be representative of the at least one item being retrieved after the calendar event. The method can further comprise controlling the display device to provide a representation of a reminder that the at least one item is to be retrieved, if the status of the at least one item is unchecked after a given time period following the reminder time.

The list of items can comprises at least one of data representative of physical items brought to the calendar event, data generated during the calendar event, e-mail data, agenda data, image data, video data, voice data, items associated with a trip itinerary, a reminder to take a certain action, and indication that at least one of the physical items is to be given to another attendee of the calendar event.

The method can further comprise assigning a priority to at least one item in the list of items by at least one of highlighting the at least one item and moving the at least one item higher up in the list of items.

Determining the reminder time can comprise at least one of: determining an end time of the meeting from the duration data, the duration data comprising the end time, the reminder time comprising the end time; determining the end time of the meeting from the start time data and the duration data, the reminder time comprising the end time; receiving first input data from an input device associated with the computing device, the first input data comprising the reminder time; receiving second input data from the input device, the second input data comprising a predetermined duration after the start time that the representation of the list of items is to be provided, the reminder time determined from the predetermined duration and the start time; and receiving third input data from the input device, the third input data comprising a predetermined length of time before the end time that the representation of the list of items is to be provided, the reminder time determined from the predetermined length of time and the end time.

A second aspect of the specification provides a computing device for providing reminders associated with calendar event data, the calendar event data comprising start time data and duration data associated with a calendar event, the start time data representative of a start time of the calendar event and the duration data associated with a length of the calendar event. The computing device comprises a processing unit interconnected with a memory device for storing the calendar event data. The processing unit is enabled to receive a list of items associated with the calendar event data. The processing unit is further enabled to receive a list of items associated with the calendar event data. The processing unit is further enabled to determine a reminder time associated with the list of items, the reminder time occurring after the start time. The processing unit is further enabled to compare a current time to the reminder time via a clock device associated with the computing device. The processing unit is further enabled to, when the current time substantially matches the reminder time, control a display device associated with the computing device to provide a representation of the list of items associated with the calendar event data.

The processing unit can be further enabled to receive the list of items by receiving input data representative of items on the list of items, and store the input data in the memory device in association with the calendar event data for at least one of generating the list of items and updating the list of items. Receiving the input data representative of items on the list of items can occur in association with generating the calendar event data.

The processing unit can be further enabled to receive input data representative of removing at least one item from the list of items, and update the list of items by removing the at least one item from the list of items.

The representation of the list of items can be provided in association with the processing unit controlling the display device to provide a reminder of an end time of the meeting.

The processing unit can be further enabled to receive input data representative of changing a status of at least one item on the list from unchecked to checked. Changing the status can be representative of the at least one item being retrieved after the calendar event. The processing unit can be further enabled to control the display device to provide a representation of a reminder that the at least one item is to be retrieved, if the status of the at least one item is unchecked after a given time period following the reminder time.

The list of items can comprise at least one of data representative of physical items brought to the calendar event, data generated during the calendar event, e-mail data, agenda data, image data, video data, voice data, items associated with a trip itinerary, a reminder to take a certain action, and an indication that at least one of the physical items is to be given to another attendee of the calendar event.

The processing unit can be further enabled to assign a priority to at least one item in the list of items by at least one of highlighting the at least one item and moving the at least one item higher up in the list of items.

The processing unit can be enabled to determine the reminder time by at least one of: determining an end time of the meeting from the duration data, the duration data comprising the end time, the reminder time comprising the end time; determining an end time of the meeting from the start time data and the duration data, the reminder time comprising the end time; receiving first input data from an input device associated with the computing device, the first input data comprising the reminder time; receiving second input data from the input device, the second input data comprising a predetermined duration after the start time that the representation of the list of items is to be provided, the reminder time determined from the predetermined duration and the start time; and receiving third input data from the input device, the third input data comprising a predetermined length of time before the end time that the representation of the list of items is to be provided, the reminder time determined from the predetermined length of time and the end time.

The computing device can further comprise the display device and an input device, each interconnected with the processing unit.

A third aspect of the specification provides a computer program product, comprising a computer usable medium having a computer readable program code adapted to be executed to implement a method for providing reminders associated with calendar event data stored in a memory device of a computing device, the calendar event data comprising start time data and duration data associated with a calendar event, the start time data representative of a start time of the calendar event and the duration data associated with a length of the calendar event, the method comprising: receiving a list of items associated with the calendar event data; determining a reminder time associated with the list of items, the reminder time occurring after the start time; comparing a current time to the reminder time via a clock device associated with the computing device; and when the current time substantially matches the reminder time, controlling a display device associated with the computing device to provide a representation of the list of items associated with the calendar event data.

### BRIEF DESCRIPTIONS OF THE DRAWINGS

Example embodiments are described with reference to the following Figures, in which:

Fig. 1 depicts a block diagram of a computing device for providing reminders associated with calendar event data, according to non-limiting embodiments;

Fig. 2 shows a block diagram of a flow chart of a method for providing reminders associated with calendar event data, according to non-limiting embodiments;

Fig. 3 depicts a representation of data on a display device for generating calendar event data and a list of items associated therewith, according to non-limiting embodiments;

Fig. 4 shows a representation of data on a display device for providing calendar event data and a list of items associated therewith, according to non-limiting embodiments;

Fig. 5 illustrates a representation of data on a display device for providing a reminder of the list of items at the end of a calendar event, according to non-limiting embodiments; and

Fig. 6 depicts a representation of data on a display device for providing a reminder of forgotten items in a list of items after the end of a calendar event, according to non-limiting embodiments.

### DETAILED DESCRIPTION OF THE EMBODIMENTS

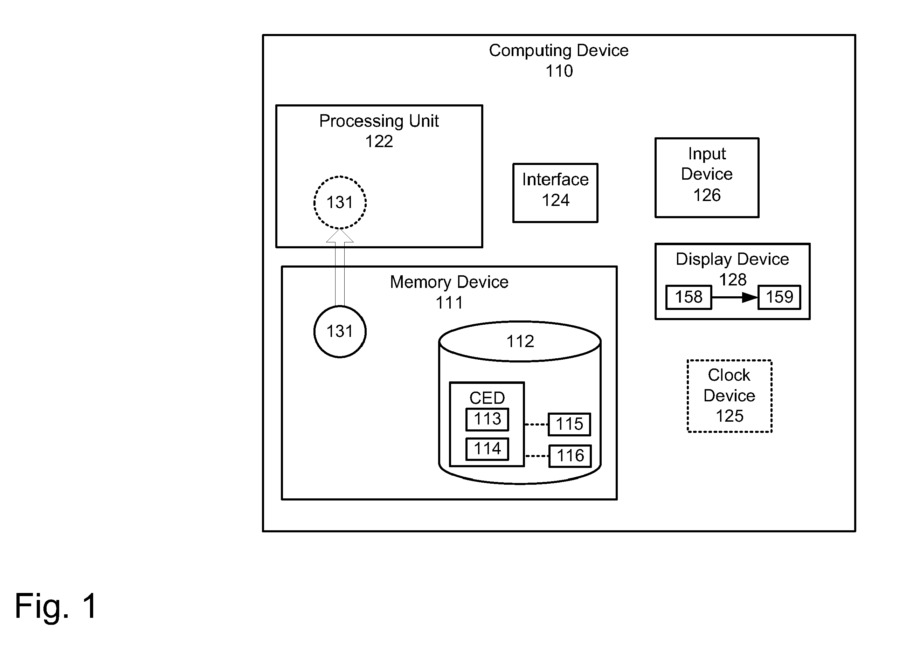

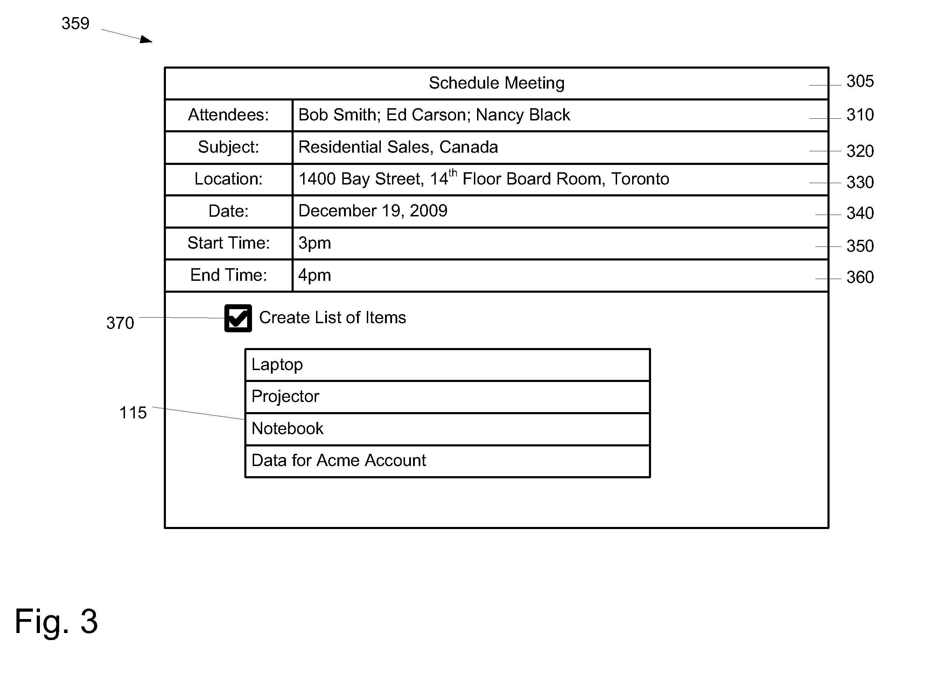

Fig. 1 depicts a computing device 110 for providing reminders, according to non-limiting embodiments, reminders are associated with calendar event data CED in a memory device 111 of computing device 110, for example in a calendar database 112. Calendar event data CED generally comprises start time data 113 and duration data 114 associated with a calendar event, including but not limited to a scheduled meeting, an appointment, and the like. Start time data 113 comprises a time that the calendar event is to start (e.g. 3pm, for example see Figs. 3-6), and duration data 114 comprises an indication of a time that the calendar event is to end; it is understood that in some embodiments duration data 114 can comprise a length of time over which the calendar event is scheduled to occur (e.g. 1 hour), while in other embodiments, duration data comprises a time at which the calendar event is scheduled to end (e.g. 4pm, for example see Figs. 3-6). In some embodiments, each of start time data 113 and duration data 114 can further comprise a date upon which the calendar event is to occur (e.g. December 19, 2009, for example see Figs. 3-6), however in other example embodiments, the data can be stored separately from start time data 113 and duration data 114. Nonetheless, it is understood that the format in which start time data 113, duration data 114 and a date is generally non-limiting. It is generally understood that the term "data" can refer to a single database field and/or a plurality of database fields. Furthermore, it is understood that the term "data" is not to be considered unduly limiting and can refer to any suitable data, information, and the like which can be stored in a memory, such as memory device 111. In some embodiments, start time data 113 can be stored in a single database field in calendar database 112 or in a plurality of fields in calendar database 112.

Calendar database 112 further comprises a list of items 115 stored in association with calendar event data CED, described in further detail below. In some embodiments, an item in list of items 115 can be a physical item (e.g. a book, a projector, and the like) or a virtual item (e.g. an electronic file).

Computing device 110 comprises a processing unit 122, a communications interface 124 and memory device 111, all in communication, for example, via a computing bus (not depicted). In some embodiments, computing device 110 further comprises a clock device 125 from which the current time can be determined, for example via a suitable interaction between processing unit 122 and clock device 125. In some embodiments, however, computing device 110 can determine the current time via an external clock device, for example an external clock device in communication with computing device 110 via any suitable wired or wireless network (e.g. computing device 110 an request a current time from a time server via a network). In still other example embodiments, the processing unit 122 has an internal clock device that serves the same purpose as the clock device 125. In example embodiments described herein, computing device 110 further comprises an input device 126 and a display device 128. In other example embodiments, at least one of input device 126 and display device 128 can be external to computing device 110, e.g. when computing device 110 comprises a personal computer; in these embodiments, computing device 110 is in communication with input device 126 and display device 128 via any suitable wired or wireless link.

Computing device 110 further comprises an application 131 stored in memory device 111 and processable by processing unit 122. In particular, application 131 comprises a calendaring application, as described below.

Computing device 110 comprises any suitable computing device for controlling display device 128 to provide a representation of a reminder associated with calendar event data CED, a representation of list 115, and for processing application 131, including but not limited to any suitable combination of a desktop computer, a laptop or notebook computer, a PDA, a cellular or mobile phone, a portable electronic device, or the like. Other suitable types of computing devices are within the scope of present embodiments.

Memory device 111 can be any suitable one of or combination of volatile memory, non-volatile memory, RAM, ROM, hard drive, optical drive, or the like.

Processing unit 122 can comprise any suitable processor, or combination of processors, including but not limited to a microprocessor, CPU (central processing unit), or the like.

Communications interface 124 is enabled to communicate with other computing device and/or communication devices via a communications network (not depicted), for example to transmit and receive calendar events, e-mail, messages, attachments, and the like. Accordingly, communications interface 124 is enabled to communicate according to any suitable protocol which is compatible with a given communications network, including but not limited to packet based protocols, Internet protocols, analog protocols, cell phone protocols (1X, UTMS, CDMA, GMS, and the like), WiFi protocols, WiMax protocols and/or a combination of these. Other suitable protocols are within the scope of present embodiments. In embodiments where input device 126 and display device 128 are external to computing device 110, communications interface 124 is further enabled to communicate with input device 126 and display device 128, either wired or wirelessly as desired, via any suitable protocol.

Input device 126 is generally enabled to receive input data, and can comprise any desired one of or combination of suitable input devices, including but not limited to a keyboard or keypad, a pointing device, a mouse, a trackball, a thumbwheel, a touchpad, a touch screen or the like.

Display device 128 comprises circuitry 158 for generating a representation 159 of calendar application 131 and/or calendar event data CED and/or reminders associated with calendar event data CED and/or list 115. Display device 128 can include any one of or suitable combination of CRT and/or flat panel displays (e.g. LCD, AOLED, plasma, touchscreen displays and the like). Circuitry 158 can include any suitable circuitry for controlling the CRT and/or flat panel displays etc., including but not limited to display buffers, transistors, electron beam controllers, LCD cells, plasmas cells, phosphors etc. In particular, display device 128 and circuitry 158 can be controlled by processing unit 122 to generate representation 159.

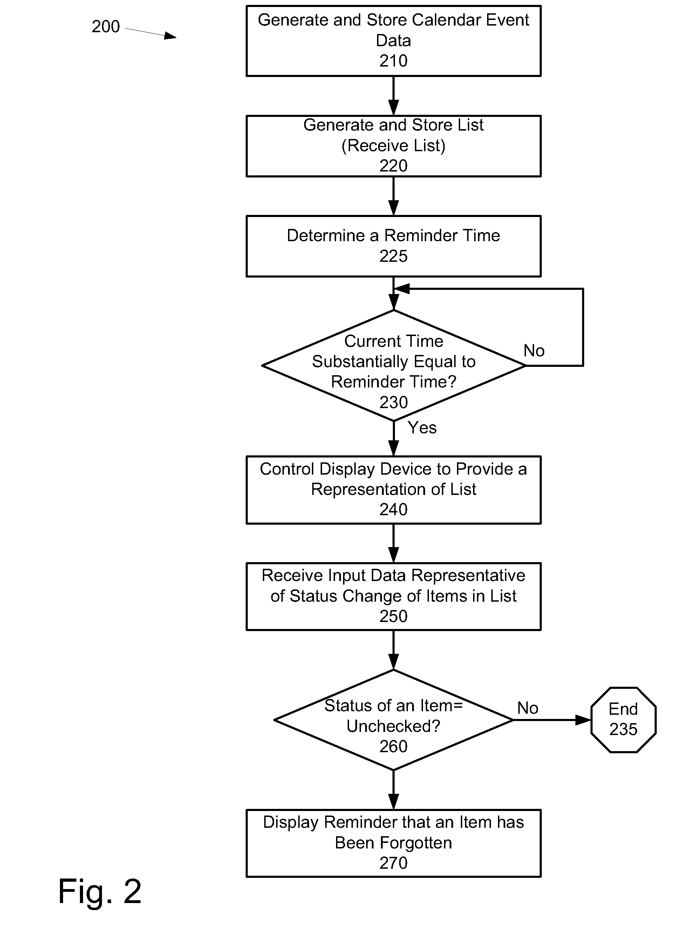

Referring now to Fig. 2, there is shown a method 200 for providing reminders associated with calendar event data stored in a memory device of a computing device, the calendar event data comprising start time data and duration data associated with a calendar event, the start time data representative of a start time of the calendar event and said duration data associated with a length of said calendar event. In order to assist in the explanation of method 200, it will be assumed that method 200 is performed using computing device 110. Furthermore, the following discussion of the method 200 will lead to a further understanding of computing device 110 and its various components. However, it is to be understood that computing device 110 and/or the method 200 can be varied, and need not work exactly as discussed herein in conjunction with each other, and that such variations are within the scope of present embodiments.

At step 210, calendar event data CED is generated and stored in memory device 111. At step 220, list of items 115 is generated and stored in memory device 111, in association with calendar event data CED. Furthermore, in some embodiments, when list of items 115 is generated and stored in memory device 111, list of items 115 can be stored in calendar event data CED in memory device 111. For example, the list of items 115 can be received via input device 126, but can also be received via e-mail, via interface 124, or any other suitable interface. Example embodiments where items in the list of items 115 can be received are described below. Furthermore, different items in the list of items 115 can be received differently, with some items received via input device 126 and other items received via e-mail and/or voice notes and/or a camera etc.

At step 225 a reminder time is determined, the reminder time associated with list of items 115, the reminder time occurring after a start time of the calendar event, for example the start time indicated in start time data 113. In general it is understood that the reminder time is a time, after the start time, at which display device 128 is to be controlled to provide a representation of list of items 115.

In some embodiments where duration data 114 comprises an end time of the calendar event, the reminder time can be determined from duration data 114, and the reminder time is determined to be the end time of the calendar event.

In some embodiments where duration data 114 comprises a length of time over which the calendar event is scheduled to occur (e.g. 1 hour), the reminder time can be determined from start time data 113 and duration data 114: specifically the reminder time is determined to be the end time of the calendar event by adding the length of time over which the calendar event is scheduled to occur to start time data 113 (e.g. if the calendar event starts at 3:00pm and is scheduled to last 1 hour, the end time is determined to be 4:00pm),

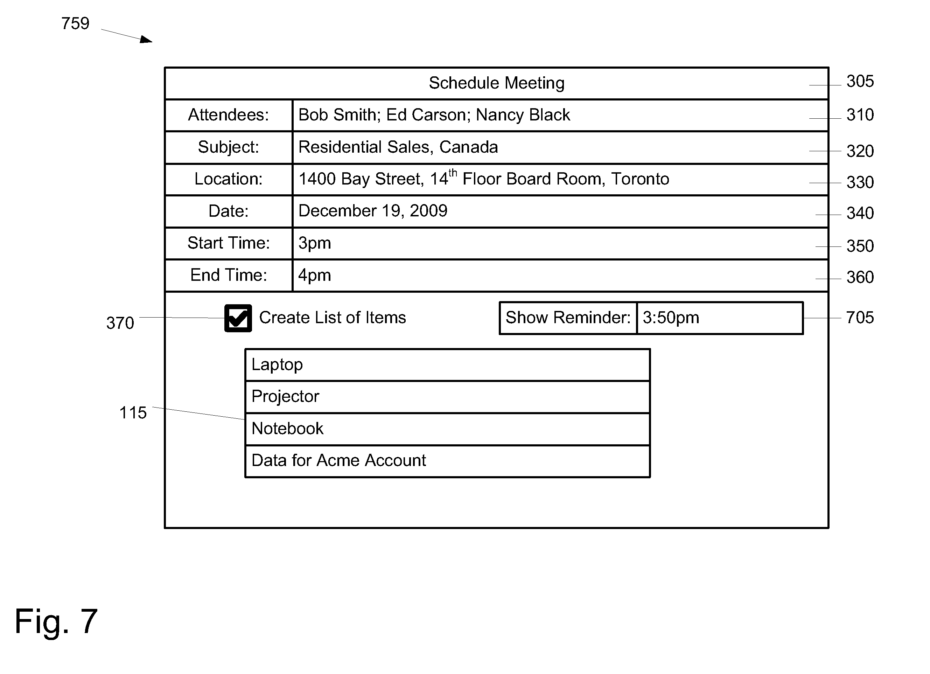

In other example embodiments, input data is received from input device 126, the input data comprising the reminder time. For example, a representation of the calendar application 131 can include a field indicating a time at which list of items 115 is to be provided (e.g. see Fig. 7, described below).

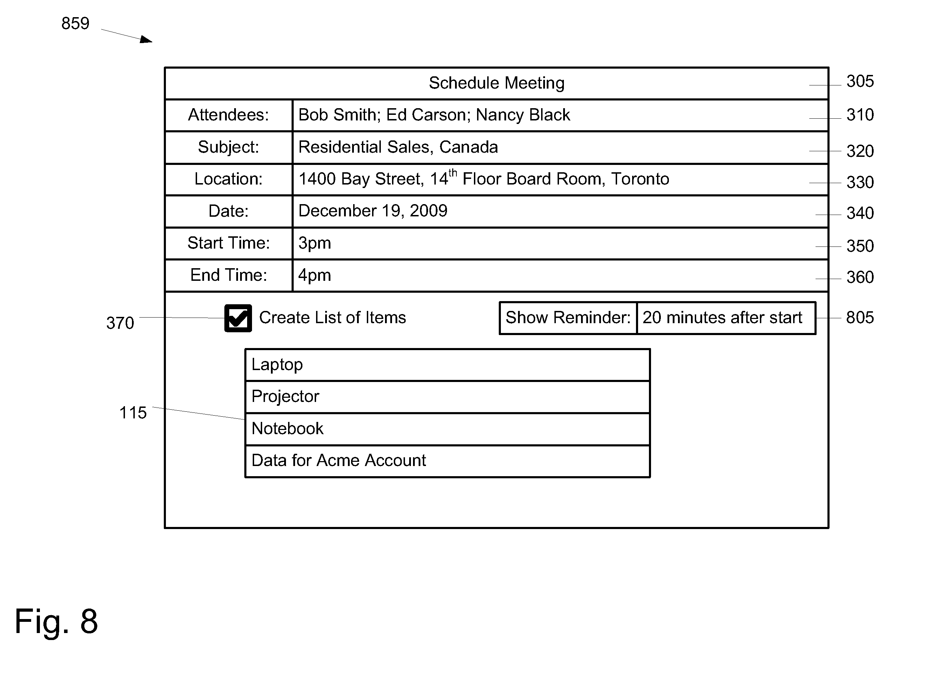

In further example embodiments, input data is received from input device 126, the input data comprising a predetermined duration (e.g. 20 minutes) after the start time that display device 128 is to be controlled to provide a representation of list of items 115 (e.g. see Fig. 8, described below). In these embodiments, the reminder time is determined from the predetermined duration and the start time data 113: specifically the reminder time is determined by adding the predetermined duration to the start time data 113 (e.g. if the calendar event starts at 3:00pm and the predetermined duration is 20 minutes, then the reminder times is determined to be 3:20pm).

In yet further example embodiments, input data is received from input device 126, the input data comprising a predetermined length of time (e.g. 10 minutes) before the end time that display device 128 is to be controlled to provide a representation of list of items 115. In these embodiments, the reminder time is determined from the predetermined length of time and the start time data 113 and/or the duration data 114. Specifically, the reminder time is determined by determining the end time, as above, and subtracting the predetermined length of time from the end time (e.g. if the calendar event is determined to end at 4:00pm and the predetermined length of time is 20 minutes, then the reminder times is determined to be 3:50pm).

In embodiments where the reminder time is determined via receipt of input data, the predetermined duration and/or the pre-determined length of time can be an expected duration of the calendar event (e.g. a calendar event can be scheduled for an hour, but expected to last a shorter period of time) and/or a meeting organizer/attendee preference (e.g., an early departing attendee can prefer to be reminded of list 115 at a time during the calendar event (e.g. halfway) rather than at the end of the calendar event).

In some example embodiments, the reminder time can be stored in memory device 111 as reminder time data 116, as depicted in Fig. 1. In some of these embodiments, reminder time data 116 can be stored in calendar event data CED in memory device 112.

Steps 210 to 225 can occur in any suitable order and/or in parallel with each other. For example, Fig. 3 depicts non-limiting embodiments of representation 359 comprising a view of calendar application 131 in which calendar event data CED and list 115 are generated, and which can further enable a determination of the reminder time. In some embodiments, representation 159 comprises representation 359. In any event, in depicted embodiments representation 359 comprises a header 305 including text data "Schedule Meeting", indicative that a calendar event is being scheduled. In some embodiments, invitees can be selected and/or entered via an optional "Attendee" field 310 and to which an a meeting invitation can be transmitted; subject data for the calendar event can be selected and/or entered, as desired, via a "Subject" field 320. Location data for the calendar event can be selected and/or entered, as desired, via a "Location" field 330, and a date, start and end times for the calendar event can be selected and/or entered via respective "Date", "Start Time" and "End Time" fields 340, 350, 360. In particular, in these embodiments, "Start Time" and "End Time" fields 350, 360 correspond respectively to start time data 113 and duration data 114. In other embodiments, rather than "End Time Field", representation 359 can comprise a "Meeting Length" field (and the like), in which the length of time over which the meeting is scheduled to occur can be selected and/or entered (e.g. 1 hour). It is understood that calendar even data CED is generated by processing the data in fields 310-370.

Furthermore, in these example embodiments, representation 359 comprises a checkbox 370 which, when activated (as depicted), indicates that a "Create List of Items" option has been selected and hence input can be received from input device 126 to generate list 115. As depicted in Fig. 3, list 115 comprises a table containing data representative of items to be brought to the calendar event and/or taken away from the calendar event. For example, as depicted list 115, comprises text data: "Laptop", "Projector", "Notebook", "Data for Acme Account". It is understood that each subset of text data within list 115 is representative of either a real or digital item that is to be brought and/or taken away from the calendar event. For example, list 115 can include, but is not limited to, at least one of data representative of physical items brought to the calendar event, data generated during the calendar event, e-mail data, agenda data, image data, video data, voice data, and the like. The list 115 as a minimum could only contain one item, and may contain a large quantity of items limited in number only by implementation decisions.

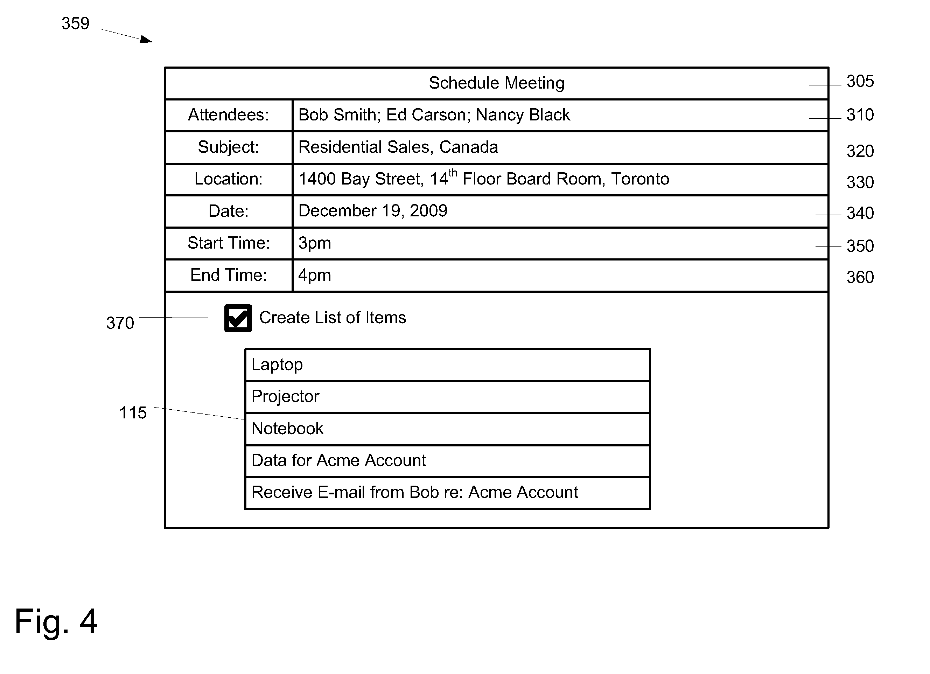

It is understood that, in some example embodiments, list 115 is generated upon receipt of input data representative of items in list 115; the input data can be received from input device and then stored in memory device 111, in association with calendar event data CED, as list 115. It is further understood that input data can be received to update list 115. For example, calendar event data CED and/or list 115, as represented in representation 359, can be retrieved at any time before or during the calendar event, and edited, for example by receiving further data from input device 126. For example, list 115 can be updated by either adding or deleting items. Such an update can occur if the items to be brought to the calendar event changes and/or if items to be taken away from the calendar event changes. For example, during the calendar event, it can be agreed that an e-mail is to be forwarded/transmitted to all attendees of the calendar event. Hence, the item, "Receive E-mail from Bob re: Acme Account" can be added to list 115, as in Fig. 4, which is substantially similar to Fig. 3, with like elements having like reference numbers. Similarly, input data representative of removing at least one item from list 115 can be received and list 115 can be subsequently updated by removing the at least one item from list 115.

In some example embodiments, receiving the input data representative of items in list 115 occurs in association with generating calendar event data CED, as depicted in representation 359.

It is further understood that, in some embodiments, calendar event data CED can be transmitted to the attendees listed in field 310, for example in a meeting invitation and/or an e-mail transmitted via communication interface 124 and a communications network. In some of these embodiments, list 115 can be transmitted with calendar event data CED, while in other embodiments list 115 is not transmitted with calendar event data CED. In these latter embodiments, it is understood that list 115 remains local to computing device 110.

Referring back to Fig. 2, at step 230, a current time is compared to the reminder time; the current time can be determined from clock device 125. It is understood that step 230 occurs after the start time indicated in start time data 114 (i.e. step 230 occurs while after the calendar event is occurring). If no match is found, step 230 is repeated, for example periodically, until the current time is determined to substantially match the reminder time determined at step 225. It is understood that a match between the current time and the reminder time need not be an exact match. For example, if the reminder time comprises 4pm and the current time comprises, 4:00:38pm (i.e. hours:minutesaeconds) then a substantial match has occurred. It is further understood that, in some embodiments, if step 230 is repeated with a period that causes the current time to surpass the reminder time, then a substantial match can be determined between the reminder time and a current time greater than the reminder time: for example, if the reminder time comprises 4pm and the current time comprises, 4:03:57pm, then a substantial match has occurred. It is yet further understood that, in some embodiments, a substantial match can be determined between the reminder time and a current time that is within a given time period of the reminder time, for example within 5 minutes of the reminder time: hence, in some of these embodiments, a substantial match can be determined if the current time is less than the reminder time. For example, if the reminder data comprises 4pm and the current time comprises, 3:55:32pm, then a substantial match has occurred. It is understood that the given time period within which a substantial match can be determined can be set via receipt of input data (e.g. the given time period can be indicated within a field in representation 359).

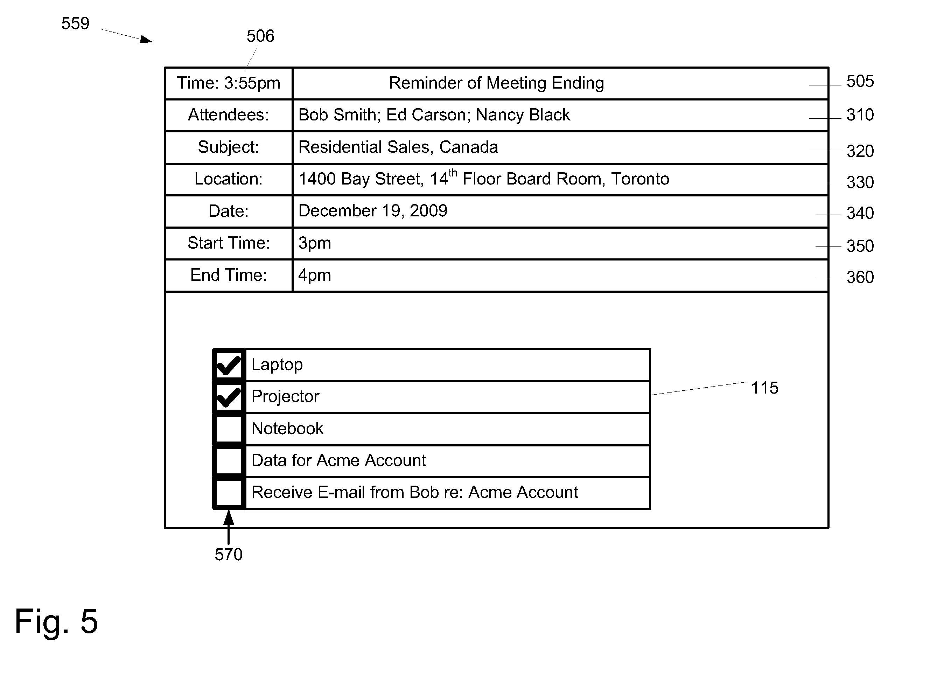

At Step 230, when the current time substantially matches the reminder time, processing unit 122 at step 240 controls the display device 128 to provide a representation of list 115, as illustrated in representation 559 depicted in Fig. 5, according to non-limiting embodiments. Representation 559 is similar to representation 359 with like elements having like numbers, however representation 559 comprises a header 505 including text data "Reminder of Meeting Ending", indicative that the data being provided in representation 359 is indicative of a reminder that the calendar event is over and/or is close to being over. In some embodiments, representation 359 further comprises an optional field 506 providing the current time. As representation 559 further comprises list 115 and field 360, which corresponds to duration data 114, a representation of list 115 is provided in association with controlling display device 128 to provide a reminder of the end time.

In depicted embodiments, representation 559 further comprises optional checkboxes 570, one checkbox 570 for each of the items in list 115, in a one-to-one relationship. In these embodiments, method 200 further comprises, at step 250, receiving input data representative of changing a status of at least one item in list 115 from unchecked to checked. For example, input data can be received indicating that pointing device has been used to "click" on a checkbox 270, indicative that the status of at least one item in list 115 has changed. The change in status can be representative of the at least one item being either retrieved or possession of the at least one item verified. For example, in Fig. 5, the items in list 115 "Laptop" and "Projector" have been checked while the remaining items in list 115 are unchecked. It is understood that the remaining items in list 115 can be checked once each item has been either retrieved or possession of the at least one item verified.

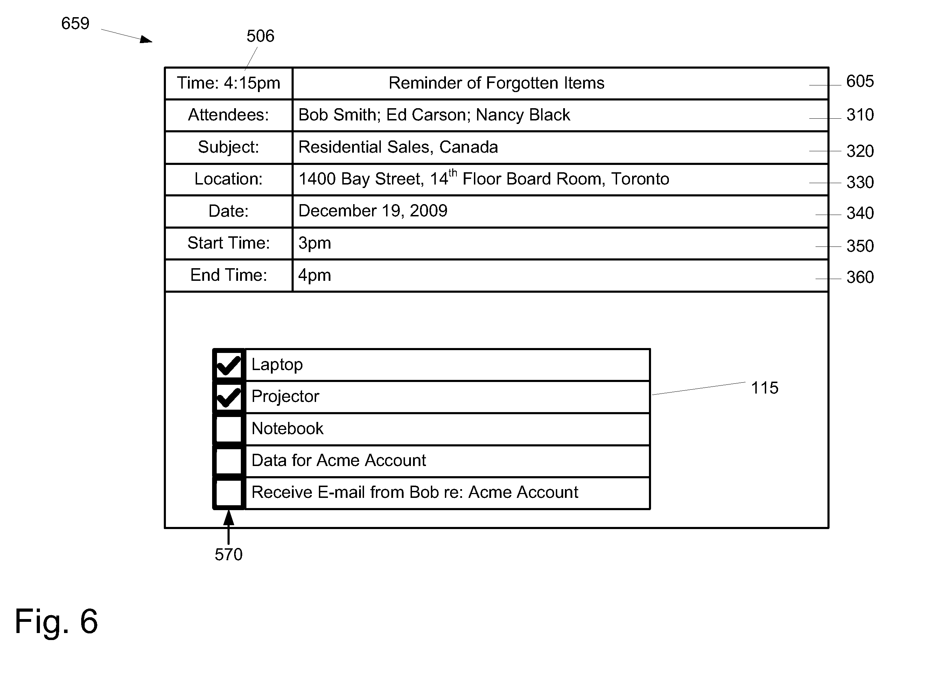

Returning to Fig. 2, method 200 can further comprise an optional step 260 of determining if the status of the at least one item is "unchecked" after a given time period, following the reminder time. If not, the method can end at step 265. If so, at step 270, processing unit 122 can control display device 128 to provide a representation of a reminder that at least one item on list 115 is to be retrieved. For example, if the calendar event ends, and not all the items on list 115 are accounted for via checkboxes 270, then it is possible that an item has been forgotten. Hence, a reminder can be provided, for example via a representation 659 as depicted in Fig. 6, according to non-limiting embodiments. Representation 659 is similar to representation 559, with like elements having like numbers, however a header 605, comprising text data "Reminder of Forgotten Items" is indicative that items might have been forgotten. Hence the items can be retrieved and/or checkboxes 570 that are unchecked, can be checked. It is further understood, via field 506, that 15 minutes have passed since the end of the meeting, and hence the given time period is 15 minutes. However, any suitable given time period is within the scope of present embodiments. The suitable given time period can be determined via receipt of input data from input device 126, for example within alternative embodiments of representation 359 of Fig. 3, via a pulldown menu, and the like.

It is understood that a listed item, in list of items 115, can be used to indicate leaving an item at the calendar event, giving an item to another attendee, or undertaking another action. For example, if the notebook computer indicated in Fig. 6 is to be left with another attendee, the item can be indicated in text as "Leave notebook with Nancy." In another example, a listed item be configured as a reminder to take a certain action such as "Turn off lights," "Return key to security," "Leave projector on for next meeting," or the like.

Fig. 7 shows non-limiting embodiments of representation 759 comprising a view of calendar application 131. Representation 759 is similar to representation 359, with like elements having like numbers. However representation 759 further comprises a field 705 for receiving the reminder time. Hence, in these embodiments, input can be received, via input device 126, in field 705 indicative of the reminder time. Processing unit 122 can cause the input data received via field 705 to be constrained to a time after the start time: hence in these embodiments, processing unit 122 can compare the input data to the start time and if the input data is indicative of a reminder time that is before the start time, processing unit 122 can control display device 128 to provide a representation of a notice to enter a time after the start time of the calendar event, discarding the input data. In other embodiments, processing unit 122 can further cause the input data received via field 705 to be constrained to a time less than or equal to the end time. In some embodiments, field 705 can comprise a pulldown menu providing times at which a representation of list 115 can be provided, for example every ten minutes after the start time until the end time.

Reference is now made to Fig. 8, which depicts non-limiting embodiments of representation 859 comprising a view of calendar application 131. Representation 859 is similar to representation 359, with like elements having like numbers. However representation 859 further comprises a field 805 for receiving a predetermined duration after which display device 128 is to be controlled to provide a representation of list 115 (as described above with reference to step 240). Hence, in these example embodiments, input can be received, via input device 126, in field 805 indicative of the predetermined duration (e.g. 20 minutes, as depicted). The reminder time can then be determined from the pre-determined duration and the start time. In other embodiments, processing unit 122 can cause the input data received via field 805 to be constrained to duration less than or equal to the duration of the calendar event. In some embodiments, field 805 can comprise a pulldown menu providing pre-determined durations after the start time, after which a representation of list 115 can be provided, for example every ten minutes after the start time until the end time. In other embodiments, field 805 can be enabled for receiving a pre-determined length time before the end time that a representation of the list 115 of items is to be provided (as in step 240). The reminder time can then be determined from the pre-determined length of time and the end time time.

In any event, by automatically controlling a display device to provide a representation of a list of items associated with calendar event data, when a current time substantially matches an end time associated with the calendar event data, resources used at the computing device are reduced. For example, computing device does not need to process any additional applications, other than the application automatically providing the representation of the list of items, such as a calendar application. This further reduces the wear and tear on an input device as input data to call up a list of items associated with the calendar event data is eliminated. Furthermore, resources used at the display device are reduced as the circuitry at the display device does not need to be controlled to provide representations of any applications (e.g. a word processor), other than the calendar application.

It is furthermore understood that the list of items can include, but is not limited to:

taking photos, and inserting pictures in the list of items;

receive incoming email during a calendar event and insert the email into the list of items;

recording voice notes (e.g. instead of typing), and attaching/inserting the voice notes into the list of items such that the voice notes can be listened to using a voice note player; or

a trip itinerary and/or items to bring on trip a (i.e., passport, sun screen, sun glasses).

It is further understood in some embodiments, items in the list of items can be given a priority by at least one of highlighting an item (i.e. using a different colour and/or font for the item, e.g. bold) and moving an item to the top of the list of items.

Those skilled in the art will appreciate that in some embodiments, the functionality of computing device 110 can be implemented using pre-programmed hardware or firmware elements (e.g., application specific integrated circuits (ASICs), electrically erasable programmable read-only memories (EEPROMs), etc.), or other related components. In other embodiments, the functionality of computing device 110 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for providing reminders associated with calendar event data stored in a memory device (111) of a computing device (110), said computing device (110) comprising a processing unit (122) interconnected with said memory device (111), said calendar event data comprising start time data and duration data associated with a calendar event, said start time data representative of a start time of said calendar event and said duration data associated with a length of said calendar event, said method comprising:
receiving, at said processing unit (122), a list of items associated with said calendar event data;
determining, at said processing unit (122), a reminder time associated with said list of items, said reminder time occurring after said start time;
comparing, at said processing unit (122), a current time to said reminder time via a clock device (125) associated with said computing device (110); and
when said current time substantially matches said reminder time, controlling, via said processing unit (122), a display device (128) associated with said computing device (110) to provide a representation of said list of items associated with said calendar event data.

2. The method of claim 1, wherein said receiving said list of items comprises receiving input data representative of items on said list of items, said method further comprising storing said input data in said memory device (111) in association with said calendar event data for at least one of generating said list of items and updating said list of items.

3. The method of claim 2, wherein said receiving said input data representative of items on said list of items occurs in association with generating said calendar event data.

4. The method of any of claims 1 to 3, further comprising receiving input data representative of removing at least one item from said list of items, and updating said list of items by removing said at least one item from said list of items.

5. The method of any of claims 1 to 4, wherein said representation of said list of items is provided in association with controlling said display device (128) to provide a reminder of an end time of said meeting.

6. The method of any of claims 1 to 5, further comprising receiving input data representative of changing a status of at least one item on said list from unchecked to checked.

7. The method of claim 6, wherein said changing said status is representative of said at least one item being retrieved after said calendar event.

8. The method of claim 6, further comprising controlling said display device (128) to provide a representation of a reminder that said at least one item is to be retrieved, if said status of said at least one item is unchecked after a given time period following said reminder time.

9. The method of any of claims 1 to 8, wherein said list of items comprises at least one of data representative of physical items brought to said calendar event, data generated during said calendar event, e-mail data, agenda data, image data, video data, voice data, items associated with a trip itinerary, a reminder to take a certain action, and an indication that at least one of said physical items is to be given to another attendee of said calendar event.

10. The method of any of claims 1 to 9, further comprising assigning a priority to at least one item in said list of items by at least one of highlighting said at least one item and moving said at least one item higher up in said list of items.

11. The method of any of claims 1 to 10, wherein said duration data comprises end time data.

12. The method of any of claims 1 to 11, wherein said determining said reminder time comprises at least one of:
determining an end time of said meeting from said duration data, said duration data comprising said end time, said reminder time comprising said end time;
determining said end time of said meeting from said start time data and said duration data, said reminder time comprising said end time;
receiving first input data from an input device (126) associated with said computing device (110), said first input data comprising said reminder time;
receiving second input data from said input device (126), said second input data comprising a predetermined duration after said start time that said representation of said list of items is to be provided, said reminder time determined from said predetermined duration and said start time; and
receiving third input data from said input device (126), said third input data comprising a predetermined length of time before said end time that said representation of said list of items is to be provided, said reminder time determined from said predetermined length of time and said end time.

13. A computing device (110) for providing reminders associated with calendar event data, said calendar event data comprising start time data and duration data associated with a calendar event, said start time data representative of a start time of said calendar event and said duration data associated with a length of said calendar event, said computing device (110) comprising:
a processing unit (122) interconnected with a memory device (111) for storing said calendar event data, said processing unit (122) enabled to implement any of steps of the method of claims 1 to 12.

14. A computer program product, comprising a computer usable medium having a computer readable program code adapted to be executed to implement a method for providing reminders associated with calendar event data stored in a memory device (111) of a computing device (110), said calendar event data comprising start time data and duration data associated with a calendar event, said start time data representative of a start time of said calendar event and said duration data associated with a length of said calendar event, said method comprising any of the steps of claims 1 to 12.

## Amended claims

### Amended claims in accordance with Rule 137(2) EPC.

**1.** A method for providing reminders associated with calendar event data stored in a memory device (111) of a computing device (110), said computing device (110) comprising a processing unit (122) interconnected with said memory device (111), said calendar event data comprising start time data and duration data associated with a calendar event, said start time data representative of a start time of said calendar event and said duration data associated with a length of said calendar event, said method comprising:
generating, at said processing unit (122), a list of items associated with said calendar event data, said generating occurring in an application for generating said calendar event data and said list of items;
storing said list of items in said memory device (111) with said calendar event data;
determining, at said processing unit (122), a reminder time associated with said list of items, said reminder time occurring after said start time;
comparing, at said processing unit (122), a current time to said reminder time via a clock device (125) associated with said computing device (110); and
when said current time substantially matches said reminder time, automatically controlling, via said processing unit (122), a display device (128) associated with said computing device (110) to provide a representation of said list of items associated with said calendar event data.

**2.** The method of claim 1, wherein said receiving said list of items comprises receiving input data representative of items on said list of items, said method further comprising storing said input data in said memory device (111) in association with said calendar event data for at least one of generating said list of items and updating said list of items.

**3.** The method of claim 2, wherein said receiving said input data representative of items on said list of items occurs in association with generating said calendar event data.

**4.** The method of any of claims 1 to 3, further comprising receiving input data representative of removing at least one item from said list of items, and updating said list of items by removing said at least one item from said list of items.

**5.** The method of any of claims 1 to 4, wherein said representation of said list of items is provided in association with controlling said display device (128) to provide a reminder of an end time of said meeting.

**6.** The method of any of claims 1 to 5, further comprising receiving input data representative of changing a status of at least one item on said list from unchecked to checked.

**7.** The method of claim 6, wherein said changing said status is representative of said at least one item being retrieved after said calendar event.

**8.** The method of claim 6, further comprising controlling said display device (128) to provide a representation of a reminder that said at least one item is to be retrieved, if said status of said at least one item is unchecked after a given time period following said reminder time.

**9.** The method of any of claims 1 to 8, wherein said list of items comprises at least one of data representative of physical items brought to said calendar event, data generated during said calendar event, e-mail data, agenda data, image data, video data, voice data, items associated with a trip itinerary, a reminder to take a certain action, and an indication that at least one of said physical items is to be given to another attendee of said calendar event.

**10.** The method of any of claims 1 to 9, further comprising assigning a priority to at least one item in said list of items by at least one of highlighting said at least one item and moving said at least one item higher up in said list of items.

**11.** The method of any of claims 1 to 10, wherein said duration data comprises end time data.

**12.** The method of any of claims 1 to 11, wherein said determining said reminder
time comprises at least one of:
determining an end time of said meeting from said duration data, said duration data comprising said end time, said reminder time comprising said end time;
determining said end time of said meeting from said start time data and said duration data, said reminder time comprising said end time;
receiving first input data from an input device (126) associated with said computing device (110), said first input data comprising said reminder time;
receiving second input data from said input device (126), said second input data comprising a predetermined duration after said start time that said representation of said list of items is to be provided, said reminder time determined from said predetermined duration and said start time; and
receiving third input data from said input device (126), said third input data comprising a predetermined length of time before said end time that said representation of said list of items is to be provided, said reminder time determined from said predetermined length of time and said end time.

**13.** A computing device (110) for providing reminders associated with calendar event data, said calendar event data comprising start time data and duration data associated with a calendar event, said start time data representative of a start time of said calendar event and said duration data associated with a length of said calendar event, said computing device (110) comprising:
a processing unit (122) interconnected with a memory device (111) for storing said calendar event data, said processing unit (122) enabled to implement any of steps of the method of claims 1 to 12.

**14.** A computer program product, comprising a computer usable medium having a computer readable program code adapted to be executed to implement a method for providing reminders associated with calendar event data stored in a memory device (111) of a computing device (110), said calendar event data comprising start time data and duration data associated with a calendar event, said start time data representative of a start time of said calendar event and said duration data associated with a length of said calendar event, said method comprising any of the steps of claims 1 to 12.
